# EUROPEAN PATENT SPECIFICATION

(11) **EP 0 606 018 B1**
(45) Date of publication and mention of the grant of the patent: **04.03.1998**
(21) Application number: 93310627.0
(22) Date of filing: 30.12.1993
(51) Int. Cl.: H04N 5/232

(54) **Automatic focus adjusting device for a video camera**
Automatische Fokussierung für eine Videokamera
Dispositif de focalisation automatique pour caméra vidéo

(30) Priority: 06.01.1993 JP 510/93
(43) Date of publication of application: 13.07.1994
(73) Proprietor: MATSUSHITA ELECTRIC INDUSTRIAL CO., LTD., Kadoma-shi, Osaka-fu, 571 (JP)
(72) Inventor: Ito, Asanobu, Osaka-shi, Osaka-fu (JP); Ishiguro, Keizo, Katano-shi, Osaka-fu 576 (JP)
(74) Representative: Crawford, Andrew Birkby

(56) References cited:
- EP-A- 0 318 278
- EP-A- 0 501 723
- DE-A- 3 919 464
- US-A- 4 974 092

## Description

### BACKGROUND OF THE INVENTION

### 1. Field of the Invention

The present invention relates to an automatic focus adjusting device for focusing an image of an object automatically to the most appropriate focusing position, when adjusting a focus of a video camera.

### 2. Description of Prior Art

The automatic focus adjusting device is used for various cameras such as video cameras, still cameras, and the like, and various systems such as distance measuring systems which make use of infrared radiation, phase difference detecting system, and the like.

The video cameras adopt a method using an image signal system which carries out focus adjustment by use of a change in luminance signal (hereinafter called as "contrast"), the details of which are described, for instance, in the paper, "Automatic focus adjustment for video camera by a climbing servo system" ("NHK Technical Research Report, Vol. 17, No. 1, Page 21; written by Ishida et al, published in 1965).

The image signal system requires no optical system for focus adjustment, but leads fine adjustment. It has, however, following problems;
(1) When carrying out focus adjustment with a focal signal conducted by such an arithmetic operation as differentiation or the like of the image signal, the image signal is continuous in a horizontal direction, and only the information of contrast in the horizontal direction of the object is extracted, so that it is difficult to extract focal signals in accordance with the focusing condition for an object having contrast in a vertical direction.
(2) A method to make continuous signals in the vertical direction through use of a line memory, carry out an arithmetic operation of differentiation with the signals, and extract the contrast in the vertical direction is proposed in USP 4,975,726, but the use of line memory makes the hardware inevitably larger in size.
US-A-4,974,092 discloses an automatic focusing device for a camera which enhances accurate focusing when an object has contrast in the vertical direction. A signal extracted from the picture signal in this document is derived by the finding a plurality of sampling points arranged in a direction which intersects the scanning lines of the video signal. When the raster scan reaches any of these sampling points the corresponding signal is extracted, and the extracted signals are compared to determine the focus in the vertical direction.

It is an object of the invention to extract focal information of an object having contrast only in a vertical direction.

The present invention provides an automatic focus adjusting device comprising:
an image pickup lens containing a focus adjusting lens;
an image pickup device for opto-electrically converting an object image obtained through said image pickup lens to obtain an electrical signal;
an image pickup processing circuit for outputting an image signal containing a luminance signal level by processing said electrical signal obtained from said image pickup device;
a focal signal detecting means for arithmetically calculating a focal signal which corresponds to a focusing condition of said image pickup lens from said image signal;
a lens drive means for carrying out focus adjustment by moving said focus adjusting lens along an optical axis of said image pickup lens; and
a lens controller responsive to said focal signal for indicating to said lens drive means a target position to which said focus adjusting lens is to be moved;
wherein said focal signal detecting means comprises a horizontal focal signal detecting means for arithmetically calculating a horizontal focal signal from a change of said luminance signal level of said image signal in a scanning line direction and a vertical focal signal detecting means for arithmetically calculating a vertical focal signal from a change of said luminance signal level of said image signal in a vertical direction perpendicular to said scanning line direction,
characterized in that said vertical focal signal detecting means comprises an integrating means for integrating said image signal in a predetermined range within a scanning line to produce an integrated signal and a band amplifier for amplifying said integrated signal in a specific band to obtain said vertical focal signal.

With the structure as mentioned above, the present invention allows focusing based on the signals from said vertical focal signal detecting means for extracting contrast in the vertical direction of the object having contrast only in the vertical direction to the scanning lines, and also allows automatic focus adjustment with high accuracy by means of simple hardware.

### BRIEF DESCRIPTION OF THE DRAWINGS

Fig. 1 shows a block diagram of an automatic focus adjusting device of a first embodiment of the present invention.

Fig. 2 shows an example (when an object is in focus) of an object being made to focus by the automatic focus adjusting device of the first embodiment of the present invention.

Fig. 3 shows an example (when an object is out of focus) of an object being made to focus by the automatic focus adjusting device of the first embodiment of the present invention.

Fig. 4 shows a block diagram of an automatic focus adjusting device of a second embodiment of the present invention.

Fig. 5 shows an example (when an object is in focus) of an object being made to focus by the automatic focus adjusting device of the second embodiment of the present invention.

Fig. 6 shows an example (when an object is out of focus) of an object being made to focus by the automatic focus adjusting device of the second embodiment of the present invention.

### DESCRIPTION OF THE PREFERRED EMBODIMENTS

Description of embodiments of an automatic focus adjustment device of the present invention follows below, with reference to drawings.

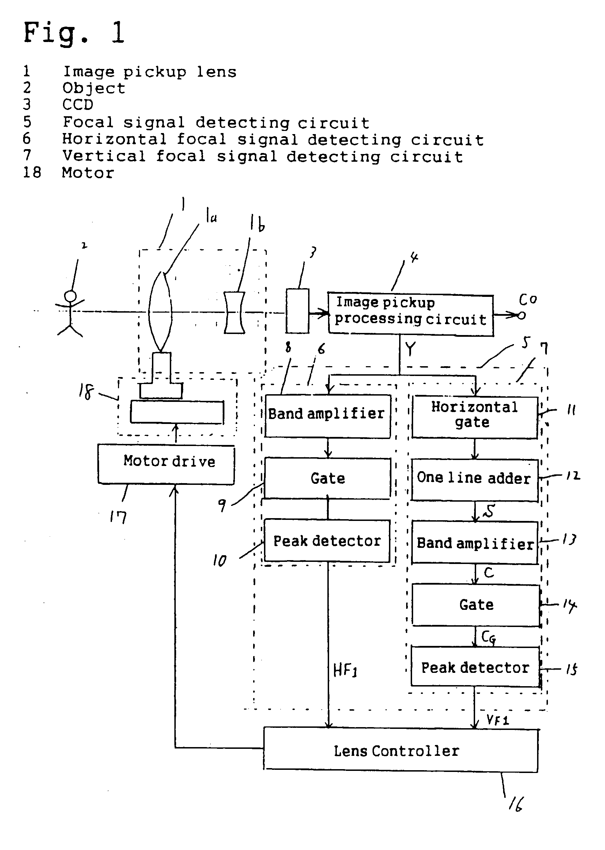

Fig. 1 shows a block diagram of a first embodiment of the present invention. In the figure, numeral 1 represents an image pickup lens, composed of 2 sets of lenses (Each set of lenses is shown in such a manner that they are composed of one concave lens and one convex lens for convenience' sake, but in practice they are composed of a plurality of concave lenses and convex lenses. In this drawing, they are shown as a convex lens 1a and a concave lens 1b, respectively). An image of an object 2 is inputted into a CCD 3 through the image pickup lens 1. An image pickup processing circuit 4 outputs a certain image signal (for example, NTSC signal) C0 by carrying out various signal processing to electric signals obtained from the CCD 3.

A focal signal detecting circuit 5 carries out arithmetic operation of focal signals which corresponds to a focusing condition of the image pickup lens 1 at a field cycle by a luminance signal Y which is outputted from the image pickup processing circuit 4, and has a horizontal focal signal detecting circuit 6 which extracts contrast in a horizontal direction and a vertical focal signal detecting circuit 7 which extracts contrast in a vertical direction.

The horizontal focal signal detecting circuit 6 comprises a band amplifier 8, a gate 9, and a peak detector 10. The band amplifier 8 extracts component (hereinafter called as "high frequency component") which has higher frequency than a certain frequency among the luminance signal Y and then amplifies the high frequency components. These operation in the band amplifier 8 correspond to extraction of the high frequency component in the horizontal direction of the luminance signal Y. The gate 9 lets a part of the luminance signal Y pass therethrough only in a predetermined range (normally in a central area of a screen) among the high frequency component of one field. The peak detector 10 maintains a maximum value of an output of the gate 9 in one field. An output of the peak detector 10 is obtained as a focal signal HF1 in the horizontal direction.

The vertical focal signal detecting circuit 7 comprises a horizontal gate 11, a one line adder 12, a band amplifier 13, a gate 14, and a peak detector 15. The horizontal gate 11 lets a part of the luminance signal Y pass therethrough only in a predetermined range (normally in the central area of the screen) among one line of the luminance signal Y. The one line adder 12 produces an integrating signal S by integrating an output of the horizontal gate 11 through one line. The integrating signal S represents luminance variation in the vertical direction on the screen. The band amplifier 13 extracts a high frequency component (this component is shown as C) of the integrating signal S. This operation in the band amplifier 13 corresponds to extraction of the high frequency component in the vertical direction of the integrating signals. The gate 14 lets only the high frequency component (this component is shown as CG) in the vertical direction of the integrating signal S pass therethrough. The high frequency component in the vertical direction of the integrating signal S corresponds to a certain range in the vertical direction of the screen. The peak detector 15 maintains a maximum value of an output of the gate 14 in one field. An output the peak detector 15 is obtained as a focal signal VF1 in the vertical direction.

A lens controller 16 judges an existence of contrast in the horizontal direction by an output value H of the horizontal focal signal detecting circuit 6 to a lens position and if contrast in the horizontal direction exists, the lens controller 16 indicates with HF1 next positions of the convex lens 1a and the concave lens 1b. While if the contrast in a horizontal direction does not exist and the lens controller 16 judges contrast in the vertical direction being existed by an output value VF1 of the vertical focal signal detecting circuit 7, the lens controller 16 indicates with VF1 the next positions of the convex lens 1a and the concave lens 1b to be moved. A motor drive 17 outputs a signal for driving a motor 18 in order to move the convex lens 1a to the position indicated by the lens controller 16. The motor 18 carries out focus adjustment by moving the convex lens 1b along an optical axis of the image pickup lens. Finally, automatic focus adjustment is carried out by seeking the positions of the convex lens 1a and the concave lens 1b at which the HF1 or VF1 becomes largest.

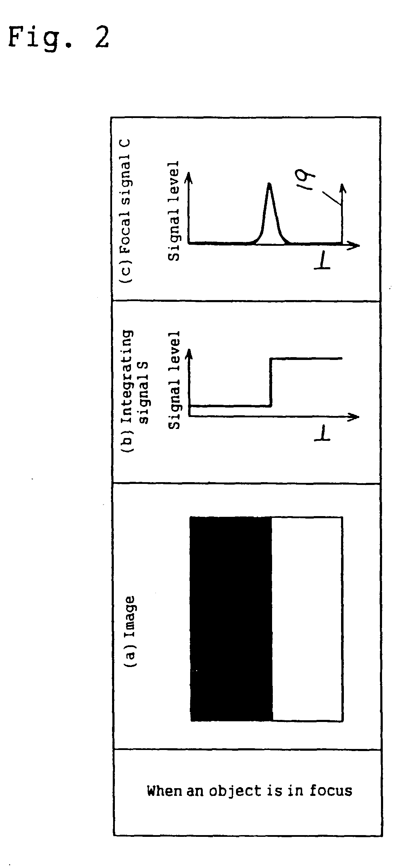

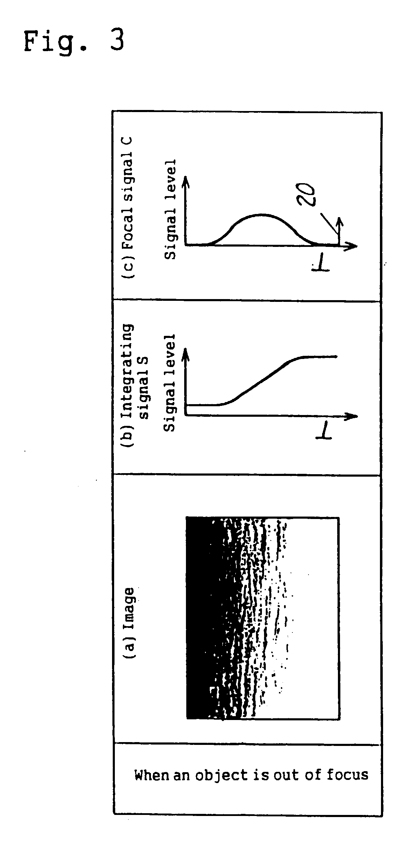

Fig. 2 and Fig. 3 show conditions of the object and each signal of the focal signal detecting circuit. Fig. 2 represents the condition when the object is in focus while Fig. 3 represents the condition when the object is out of focus. In this case, since there is no contrast in the horizontal direction, focusing is carried out by use of VF1 instead of HF1. The integrating signals S appearing after the one line adder 12 are shown in each (b) in the figures, respectively. From these signals, the high frequency components C shown in each (c) in the figures are obtained by the band amplifier 13. After the high frequency components C pass through the gate 14 and the peak detector 15, peak values of the focal signals VF1 in this field are obtained as 19 and 20. When comparing the conditions of the objects between in focus and out of focus, the condition of the object in focus shows that the focal signal from the focal signal detecting circuit has the highest value because of a sharp rise in the luminance signal. Therefore, by making the convex lens 1a stop at a position at which the focal signal VF1 from the focal signal detecting circuit becomes largest through moving the convex lens 1a, accurate focusing to the object can be attained as shown in Fig. 2.

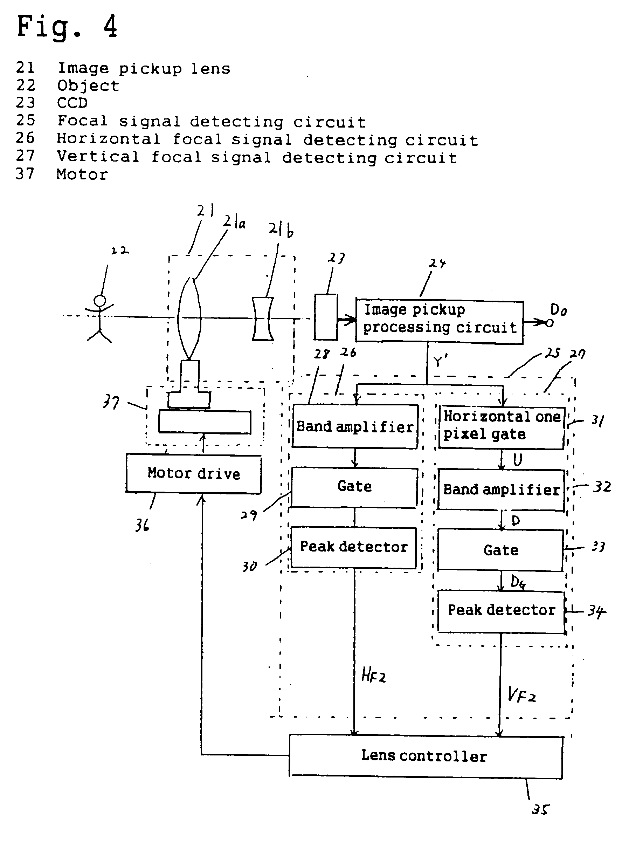

Fig. 4 shows a block diagram of a second embodiment of the present invention. In the figure, numeral 21 represents an image pickup lens, comprising 2 sets of lenses (Each set of lenses is shown in such a manner that they are composed of one concave lens and one convex lens for convenience' sake, but in practice they are composed of a plurality of concave lenses and convex lenses. In this drawing, they are shown as a convex lens 21a and a concave lens 21b, respectively). An image of an object 22 is inputted into a CCD 23 through the image pickup lens 21. An image pickup processing circuit 24 outputs a certain image signal (for example, NTSC signal) D0 by carrying out various signal processing to electric signals obtained from the CCD 23.

A focal signal detecting circuit 25 carries out arithmetic operation of focal signals which correspond to focusing condition of the image pickup lens 21 at a field cycle by a luminance signal Y' which is outputted from the image pickup processing circuit 24, and has a horizontal focal signal detecting circuit 26 which extracts contrast in a horizontal direction and a vertical focal signal detecting circuit 27 which extracts contrast in a vertical direction.

The horizontal focal signal detecting circuit 26 comprises a band amplifier 28, a gate 29, and a peak detector 30. The band amplifier 28 extracts high frequency component of the luminance signal Y'. This operation in the band amplifier 28 corresponds to extraction of the high frequency component in horizontal direction of the luminance signal Y'. The gate 29 lets a part of the luminance signal Y' pass therethrough only in a predetermined range (normally in a central area of a screen) among the high frequency component of one field. The peak detector 30 maintains a maximum value of an output of the gate 29 in one field. An output of the peak detector 30 is obtained as a focal signal HF2 in the horizontal direction.

The vertical focal signal detecting circuit 27 comprises a horizontal one pixel gate 31, a band amplifier 32, a gate 33, and a peak detector 34. The horizontal one pixel gate 31 lets only one pixel among signals of one scanning line of the luminance signal Y' pass therethrough at a predetermined timing. To let the only one pixel of each scanning line pass at the same timing corresponds to extraction of one signal U of luminance change in a vertical direction to the scanning line. The band amplifier 32 extracts high frequency component (this component is shown as D) of the one signal U of luminance change in the vertical direction outputted from the horizontal one pixel gate 31. The gate 33 lets only the high frequency component of the one signal U of luminance change in the vertical direction (this component is shown as DG) pass therethrough. The high frequency component of the one signal U of luminance change in the vertical direction corresponds to a certain range in the vertical direction of the screen. The peak detector 34 maintains a maximum value of an output of the gate 33 in one field. The output of peak detector 34 is obtained as a focal signal VF2 in the vertical direction.

A lens controller 35 judges an existence of contrast in the horizontal direction by an output value HF2 of the horizontal focal signal detecting circuit 26 to a lens position and if contrast in the horizontal direction exists, the lens controller 35 indicates with HF2 next positions of the convex lens 21a and the concave lens 21b. While if the contrast in the horizontal direction does not exist and the lens controller 35 judges contrast in the vertical direction being existed by an output value VF2 of the vertical focal signal detecting circuit 27, the lens controller 35 indicates with VF2 the next positions of the convex lens 21a and the concave lens 21b to be moved. A motor drive 36 outputs a signal for driving a motor 37 in order to move the convex lens 21a to the position indicated by the lens controller 35. The motor 37 carries out focus adjustment by moving the convex lens 21b along an optical axis of the image pickup lens. Finally automatic focus adjustment is carried out by seeking the positions of the convex lens 21a and the concave lens 21b at which the HF2 or VF2 becomes largest. (Normally, the timing of the one pixel in the scanning line is set in such a manner that the one pixel becomes vertical to one line near a central area of the screen.)

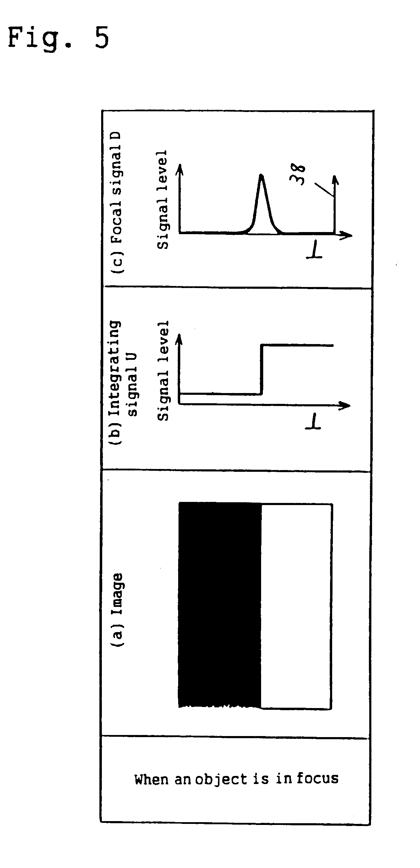

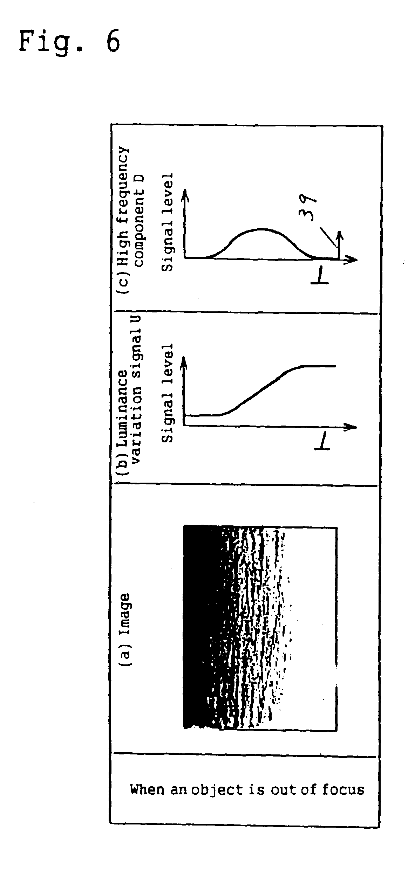

Fig. 5 and Fig. 6 show conditions of the object and each signal of the focal signal detecting circuit. Fig. 5 represents the condition when the object is in focus while Fig. 6 represents the condition when the object is out of focus. In this case, since there is no contrast in the horizontal direction, focusing is carried out by use of VF2 instead of using HF2. The one signals U of luminance change appearing after the horizontal one pixel gate 31 are shown in each (b) in the figures, respectively. From these signals, the high frequency components D shown in each (c) are obtained by the band amplifier 32. After the high frequency components D pass through the gate 33 and peak detector 34, peak values of the focal signals VF2 in this field are obtained as 38 and 39. When comparing the conditions of the objects between in focus and out of focus, the condition of the object in focus shows that focal signal from the focal signal focus detecting circuit has the highest value because of a sharp rise in luminance signal. Therefore, by making the convex lens 21a stop at a position at which the focal signal VF2 from the focal signal focus detecting circuit becomes largest through moving the convex lens 21a, accurate focusing to the object can be attained as shown in Fig. 5.

Likewise, applying the above-mentioned automatic focus adjusting device to video cameras allows high quality video images to be attained.

## Claims

1. An automatic focus adjusting device comprising:
an image pickup lens (1) containing a focus adjusting lens;
an image pickup device (3) for opto-electrically converting an object image obtained through said image pickup lens to obtain an electrical signal;
an image pickup processing circuit (4) for outputting an image signal containing a luminance signal level by processing said electrical signal obtained from said image pickup device;
a focal signal detecting means (5) for arithmetically calculating a focal signal which corresponds to a focusing condition of said image pickup lens from said image signal;
a lens drive means (18) for carrying out focus adjustment by moving said focus adjusting lens along an optical axis of said image pickup lens; and
a lens controller (16) responsive to said focal signal for indicating to said lens drive means a target position to which said focus adjusting lens is to be moved;
wherein said focal signal detecting means comprises a horizontal focal signal detecting means (6) for arithmetically calculating a horizontal focal signal from a change of said luminance signal level of said image signal in a scanning line direction and a vertical focal signal detecting means (7) for arithmetically calculating a vertical focal signal from a change of said luminance signal level of said image signal in a vertical direction perpendicular to said scanning line direction,
characterized in that said vertical focal signal detecting means (7) comprises an integrating means (12) for integrating said image signal in a predetermined range within a scanning line to produce an integrated signal and a band amplifier (13) for amplifying said integrated signal in a specific band to obtain said vertical focal signal.

2. A video camera having said automatic focus adjusting device as claimed in claim 1.

## Patentansprüche

1. Automatisches Scharfstellgerat, das umfaßt:
eine Bildaufnahmelinse (1), die eine Scharfstell-Linse umfaßt;
ein Bildaufnahmegerät (3) zum optoelektrischen Wandeln eines durch die Bildaufnahmelinse erhaltenen Objektabbildes zum Erzielen eines elektrischen Signals;
eine Bildaufnahme-Verarbeitungsschaltung (4) zum Ausgeben eines Bildsignals, das einen Luminanzsignalpegel enthält, durch Verarbeiten des von dem Bildaufnahmegerät erhaltenen elektrischen Signals;
ein Scharfstellsignal-Erfassungsmittel (5) zum arithmetischen Errechnen eines Scharfstellssignals, welches einer Fokussierungsbedingung der Bildaufnahmelinse entspricht, aus dem Bildsignal;
ein Linsenantriebsmittel (18) zum Ausführen einer Scharfstelleinstellung durch Bewegen der Scharfstell-Linse längs einer optischen Achse der Bildaufnahmelinse; und
eine Linsensteuerung (16), die auf das Scharfstellsignal reagiert zum Bezeichnen einer Zielposition für das Linsenansteuermittel, zu der die Scharfstell-Linse zu bewegen ist;
worin das Scharfstellsignal-Erfassungsmittel umfaßt ein horizontales Scharfstellsignal Erfassungsmittel (6) zum arithmetischen Errechnen eines horizontalen Scharfstellsignals aus einer Änderung des Luminanzsignalpegels des Bildsignals in einer Abtastzeilenrichtung und ein vertikales Scharfstellsignal-Erfassungsmittel (7) zum arithmetischen Errechnen eines vertikalen Scharfstellsignals aus einer Änderung des Luminanzsignalpegels des Bildsignals in einer vertikalen Richtung senkrecht zur Abtastzeilenrichtung,
**dadurch gekennzeichnet, daß** das vertikale Scharfstellsignal-Erfassungsmittel (7) umfaßt ein Integrierungsmittel (12) zum Integrieren des Bildsignals in einem vorgegebenen Bereich innerhalb einer Abtastzeile zum Erzeugen eines integrierten Signals und einen Bandverstärker (13) zum Verstärken des integrierten Signals in einem festgelegten Band zum Erhalten des vertikalen Scharfstellsignals.

2. Videokamera mit dem automatischen Scharfstellgerät nach Anspruch 1.

## Revendications

1. Dispositif de mise au point automatique comprenant :
une lentille de prise de vue (1) contenant une lentille de mise au point ;
un dispositif de prise de vue (3) pour convertir, de manière opto-électrique, une image d'objet obtenue par ladite lentille de prise de vue pour obtenir un signal électrique ;
un circuit de traitement de prise de vue (4) pour sortir un signal d'image contenant un niveau de signal de luminance en traitant ledit signal électrique obtenu à partir dudit dispositif de prise de vue ;
des moyens de détection de signal de focalisation (5) destinés à calculer, de manière arithmétique, un signal de focalisation qui correspond à un état de mise au point de ladite lentille de prise de vue à partir dudit signal d'image ;
des moyens d'entraînement de lentille (18) destinés à effectuer la mise au point en déplaçant ladite lentille de mise au point le long d'un axe optique de ladite lentille de prise de vue ; et
un contrôleur de lentille (16) sensible audit signal de localisation pour indiquer auxdits moyens d'entraînement de lentille une position cible à laquelle ladite lentille de mise au point doit être déplacée ;
dans lequel lesdits moyens de détection de signal de focalisation comprennent des moyens de détection de signal de focalisation horizontale (6) pour calculer, de manière arithmétique, un signal de focalisation horizontale à partir d'une variation dudit niveau de signal de luminance dudit signal d'image dans un sens de ligne de balayage et des moyens de détection de signal de focalisation verticale (7) pour calculer, de manière arithmétique, un signal de focalisation verticale à partir d'une variation dudit niveau de signal de luminance dudit signal d'image dans un sens vertical perpendiculaire audit sens de ligne de balayage,
caractérisé en ce que lesdits moyens de détection de signal de focalisation verticale (7) comprennent des moyens d'intégration (12) pour intégrer ledit signal d'image dans une plage prédéterminée dans une ligne de balayage pour produire un signal intégré et un amplificateur de bande (13) pour amplifier ledit signal intégré dans une bande spécifique pour obtenir ledit signal de focalisation verticale.

2. Caméra vidéo comportant ledit dispositif de mise au point automatique selon la revendication 1.
